Europäisches Patentamt

European Patent Office

Office européen des brevets

(11) Publication number: **0 600 433 A1**

# EUROPEAN PATENT APPLICATION

(21) Application number: **93119262.9**

(22) Date of filing: **30.11.93**

(51) Int. Cl.5: **F16H 19/06**

(30) Priority: **02.12.92 JP 322989/92**

(43) Date of publication of application:
**08.06.94 Bulletin 94/23**

(84) Designated Contracting States:
**DE FR GB**

(71) Applicant: **MATSUSHITA ELECTRIC INDUSTRIAL CO., LTD.**
**1006, Oaza Kadoma**
**Kadoma-shi, Osaka-fu, 571(JP)**

(72) Inventor: **Nakamura, Haruji**
**5-1, Nanpeidai 5-chome**
**Takatsuki-shi, Osaka 569(JP)**
Inventor: **Kubota, Yoshiyuki**
**3-17-14, Aoyama**
**Katano-shi, Osaka 576(JP)**
Inventor: **Machida, Hideto**
**5-22-13, Touda-cho**
**Moriguchi-shi, Osaka 570(JP)**

(74) Representative: **Eisenführ, Speiser & Partner**
**Martinistrasse 24**
**D-28195 Bremen (DE)**

(54) **Rectilinear moving apparatus.**

(57) In a rectilinear moving apparatus, a driving pulley (13) is coupled to a driving motor (11) so as to reversibly rotate. The axis of an idler pulley (14) is parallel to an axis of the driving pulley. First and second moving pulleys (16a,16b) of different diameters are formed in one unit so as to integrally rotate around a common rotary axis and arranged between the driving and idler pulleys while rotary centers of the moving pulleys, driving pulley, and idler pulley are aligned in a straight line. An endless belt (15) is held between the driving pulley, first and second moving pulleys, and idler pulley to be moved by the driving motor. The first and second moving pulleys are rotatably supported on a rectilinear sliding member (17) which is guided along a rectilinear direction by a rectilinear guide member (40). First and second pairs of guide rollers (18a,18b,18c,18d) are rotatably supported on the sliding member, and guide the belt along a peripheral portion of the first moving pulley by the first pair of the rollers while the belt is kept in touch with the first moving pulley in a first half of a course of the sliding member, and guiding the belt along a peripheral portion of the second moving pulley by the second pair of the rollers while the belt is kept in touch with the second moving pulley in a second half of the course of the sliding member.

Fig. 1

## BACKGROUND OF THE INVENTION

The present invention relates to the improvement of a rectilinear moving apparatus for use in industrial robots which is capable of rectilinearly and reciprocally moving a sliding member.

A conventional rectilinear moving apparatus will be described hereinbelow.

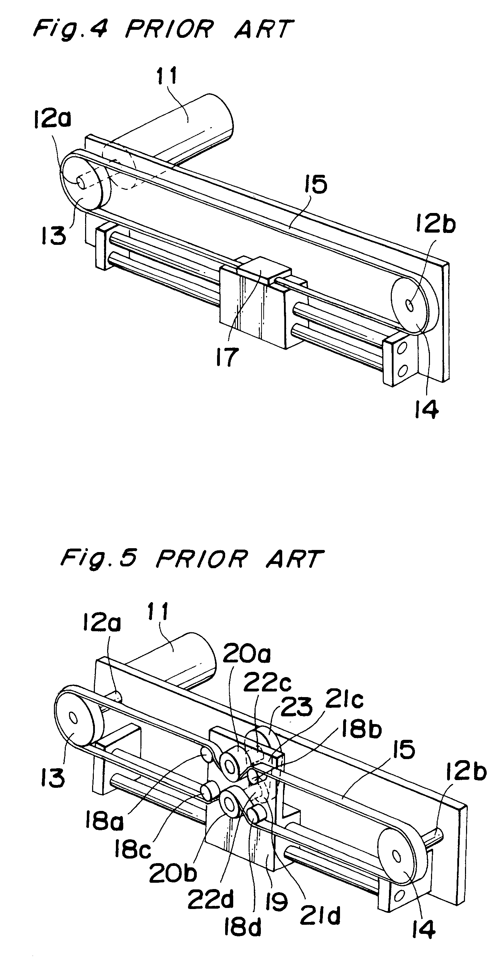

Fig. 4 indicates the basic structure of a conventional rectilinear moving apparatus disclosed in Japanese Laid-open Patent Publication No. 2-106283. In Fig. 4, a driving pulley 13 having the radius (r) is coupled to a driving motor 11 is coupled via a shaft 12a. A shaft 12b is set parallel to the shaft 12a and coupled with an idler pulley 14. An endless belt 15 connects the driving pulley 13 with the idler pulley 14. A slider 17 is arranged so as to be kept in contact with the endless belt 15 in the middle part of the driving pulley 13 and the idler pulley 14.

The operation of the above-described conventional rectilinear moving apparatus will be explained now.

When the driving pulley 13 is rotated by the angle $\theta$ by the driving motor 11, the endless belt 15 is moved the distance $r\theta$, and the slider 17 alike is moved the same distance $r\theta$. Therefore, the moving amount of the endless belt 15 by the rotation of the driving pulley 13 is equal to the moving amount of the slider 17 in the horizontal direction in the prior art arrangement.

If it is desired to decelerate the apparatus so as to augment the thrust and to improve the accuracy, conventionally, the apparatus disclosed in Japanese Laid-open Patent Publication No. 61-140665 is designed in such constitution as illustrated in Fig. 5. In Fig. 5, the shafts 12a, 12b are arranged parallel to each other, the former 12a coupling the driving motor 11 with the driving pulley 13, while the latter 12b being coupled to the idler pulley 14. The driving pulley 13 and the idler pulley 14 are connected with each other by the endless belt 15. There are provided two rotatable pulleys 20a, 20b and two pairs of guide rollers 18a, 18b and 18c, 18d in a slider 19 arranged between the pulleys 13 and 14. The endless belt 15 is sent along the pulley 20a in the first half of the movement by the guide rollers 18a, 18b. On the other hand, the endless belt 15 is retained by the guide rollers 18c, 18d to trace the pulley 20b in the latter half of the movement. A pulley 21c is coupled with the pulley 20a by a shaft 22c, which is further coupled via an endless belt 23 with a pulley 21d connected with the pulley 20b by a shaft 22d. The pulley 21d has a smaller diameter than the pulley 21c.

The operation of the rectilinear moving apparatus of Fig. 5 will be depicted below.

When the driving motor 11 is driven, the driving pulley 13 is rotated, thereby rotating the idler pulley 14 and the pulleys 20a, 20b connected by the endless belt 15. Although the pulleys 21c, 21d coaxially provided with the pulleys 20a, 20b are rotated at this time, the pulley 20b coaxial with the pulley 21d assumes a larger rotating angle than the pulley 20a coaxial with the pulley 21c because the pulley 21d is smaller in diameter than the pulley 21c. Since the moving amount of the endless belt 15 is varied due to the difference of the rotating angles of the pulleys 20a, 20b, the slider 19 is moved half the difference of the moving amount. That is, the moving amount of the endless belt 15 subsequent to the rotation of the driving pulley 13 becomes half the difference of the diameter of the pulleys 21c and 21d.

Due to a number of pulleys present in the prior art as above, the conventional apparatuses are disadvantageously complicated in structure and expensive, and the total loss of movement is large because of the backlash between each pulley and belt or the slack of the belts.

## SUMMARY OF THE INVENTION

The object of the present invention is therefore to provide an inexpensive rectilinear moving apparatus simplified in structure which realizes the high reduction gear ratio, augments the thrust, improves the positional accuracy, and reduces the loss of movement.

In accomplishing the object, according to one aspect of the present invention, there is provided a rectilinear moving apparatus comprising: a driving motor; a driving pulley coupled to the driving motor so as to reversibly rotate; an idler pulley which axis is parallel to an axis of the driving pulley; first and second moving pulleys of different diameters formed in one unit so as to integrally rotate around a common rotary axis and arranged between the driving pulley and the idler pulley while rotary centers of the moving pulleys, the driving pulley, and the idler pulley are aligned in a straight line; an endless belt held between the driving pulley, the first and second moving pulleys, and the idler pulley to be moved by the driving motor; a rectilinear sliding member on which the first and second moving pulleys are rotatably supported and which is guided along a rectilinear direction by a rectilinear guide member; and first and second pairs of guide rollers, which are rotatably supported on the sliding member, for guiding the belt along a peripheral portion of the first moving pulley by the first pair of the guide rollers while the belt is kept in touch with the first moving pulley in a first half of a course of the sliding member, and guiding the belt along a peripheral portion of the second moving pulley by the second pair of the guide rollers while the belt is kept in touch with the second moving pulley in a second half of the course of the sliding member.

## BRIEF DESCRIPTION OF THE DRAWINGS

These and other objects and features of the present invention will become clear from the following description taken in conjunction with the preferred embodiment thereof with reference to the accompanying drawings, in which:

Fig. 1 is a structural diagram of a rectilinear moving apparatus according to one preferred embodiment of the present invention;

Fig. 2 is a diagram explanatory of the ratio of the moving amount between an endless belt and a slider in the rectilinear moving apparatus of Fig. 1;

Fig. 3 is an enlarged view showing the relationship between moving pulleys and the belt in the apparatus;

Fig. 4 is a structural diagram of a conventional rectilinear moving apparatus without a reduction function; and

Fig. 5 is a structural diagram of a conventional rectilinear moving apparatus with a reduction function.

## DETAILED DESCRIPTION OF THE PREFERRED EMBODIMENT

Before the description of the present invention proceeds, it is to be noted that like parts are designated by like reference numerals throughout the accompanying drawings.

A preferred embodiment of the present invention will be discussed in detail with reference to the accompanying drawings.

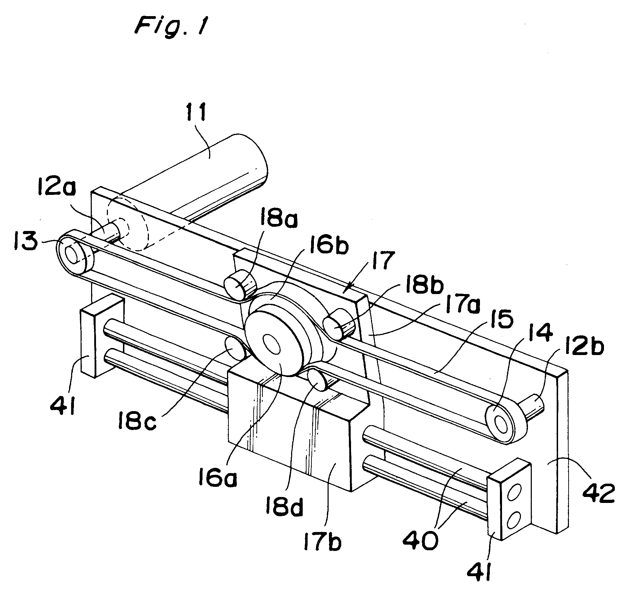

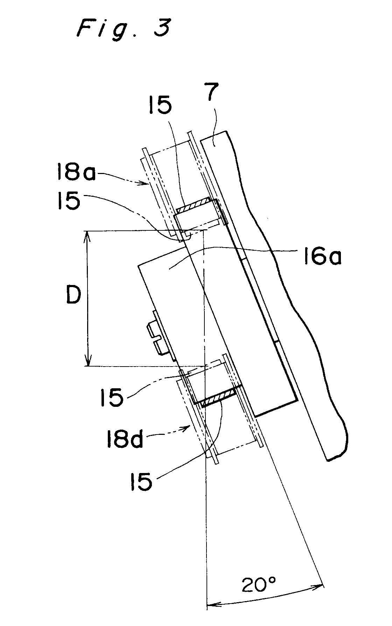

Referring to Fig. 1, shafts 12a, 12b are set parallel to each other. A driving motor 11 and a driving pulley 13 are coupled with each other by the shaft 12a. The shaft 12b is coupled with an idler pulley 14 in a manner to allow the rotation of the idler pulley 14. The shaft 12a rotatably penetrates through a base plate 42 and the shaft 12b is fixed to the plate 42. In the middle of an endless belt 15 supported between the driving pulley 13 and the idler pulley 14 are provided moving pulleys 16a, 16b of different diameters which have a common rotary axis. The pulleys 16a, 16b are formed in one unit and kept in touch with the endless belt 15. The rotary centers of the moving pulleys 16a and 16b, the driving pulley 13, and the idler pulley 14 are aligned in a straight line. A slider 17 is inclined to the plane defined by the endless belt 15, that is, the rotary plane of the driving pulley 13 and the idler pulley 14 so as to accommodate the first and second halves of the course of the backward and forward movement of the endless belt IS within the same one plane. That is, the rotary axis of the moving pulleys 16a and 16b is inclined to the rotary axes of the driving pulley 13 and the idler pulley 14 by a predetermined angle such as 20 degrees as shown in Fig. 3. The endless belt 15 is held by guide rollers 18a, 18b along a part of the peripheral portion of the moving pulley 16b in the first half of the course of movement. Meanwhile, the endless belt 15 is held by guide rollers 18c, 18d along a part of the peripheral portion of the moving pulley 16a in the second half of the course. The moving pulley 16a is smaller in diameter than the moving pulley 16b.

The slider 17 has a thin part 17a and a thick part 17b integrally formed. The moving pulleys 16a and 16b, and the guide rollers 18a, 18b, 18c, and 18d are mounted on the thin part 17a. The thick part 17b of the slider 17 is rectilinearly and reciprocally guided by two rectilinear guide rods 40 of which both ends are fixed to the plate 42 via brackets 41. The rods 40 are parallel to the straight line of the centers of the pulleys 13, 14, 16a, and 16b. Such rectilinear guide means can be replaced with any rectilinear guide means in the prior art.

As shown in Fig. 3, the guide rollers 18a and 18b are arranged on the slider 17 so as to allow the belt 15 to partially move along the peripheral portion of the moving pulley 16a. The guide rollers 18c and 18d are arranged on the slider 17 so as to allow the belt 15 to partially move along the peripheral portion of the moving pulley 16b.

In Fig. 3, the distance (D) between the center positions of the sections of the belt 15 in the first and second halves of the course brought in contact with the guide rollers 18a and 18c, or 18b and 18d is approximately equal to each diameter of the driving pulley 13 and the idler pulley 14. The driving pulley 13 has the same diameter as the idler pulley 14.

As shown in Fig. 3, each of the guide rollers 18a, 18b, 18c, and 18d has flanges at both ends to prevent the belt 15 from slipping from the rollers.

The operation of the rectilinear moving apparatus in the above-described structure will be depicted with reference to Fig. 1.

When the driving motor 11 is driven, the driving pulley 13, the idler pulley 14, and the moving pulleys 16a, 16b coupled by the endless belt 15 are simultaneously rotated. Since the moving pulleys 16a, 16b are formed integrally although the diameters are different, the slider 17 is moved in the horizontal direction due to the difference of the moving amounts of the endless belt 15 on the circumferences of the moving pulleys 16a, 16b. If the ratio of the diameters of the moving pulleys 16a, 16b is changed, it is possible to change the moving amount of the slider 17 to the rotating amount of the driving motor 11.

The ratio of the moving amounts of the endless belt 15 and the slider 17 in the present embodiment will be represented by an equation (1) below:

$$u = (r2-r1)v/(r1 + r2) \qquad (1)$$

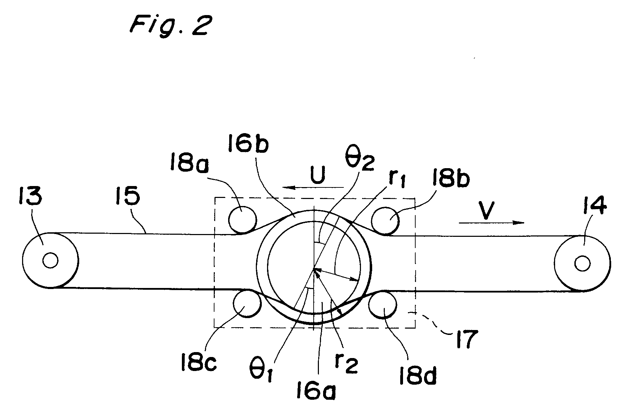

The ratio expressed as above will be further described with reference to Fig. 2.

In Fig. 2, references indicate respectively: (v) the moving amount of the endless belt 15; (u) the moving amount of the slider 17; $\theta 1$, $\theta 2$ the rotating angle of the moving pulleys 16a, 16b; and r1, r2 the radius of the moving pulleys 16a, 16b.

The ratio of the moving amounts of the endless belt 15 and the slider 17 achieved in the constitution of the above rectilinear moving apparatus will be depicted hereinbelow. The rotating angles $\theta 1$, $\theta 2$ can be represented by equations (2) and (3) with the use of v, u, r1, and r2, respectively:

$$\theta 1 = (v\text{-}u)/r1 \qquad (2)$$

$$\theta 2 = (v + u)/r2 \qquad (3)$$

Since the moving pulleys 16a, 16b are constructed in one unit, an equation (4) will be held:

$$\theta 1 = \theta 2 \qquad (4)$$

The above equation (1) is obtained from the equations (2), (3), and (4).

In the embodiment, the endless belt 15 is held along the moving pulley 16b in the first half and along the moving pulley 16a in the second half of the course. However, the reverse can be employed, i.e., the endless belt 15 can be wound along the moving pulley 16a in the first half and along the moving pulley 16b in the second half. Moreover, the endless belt 15 can be an endless toothed belt.

As has been described hereinabove, according to the present embodiment, the moving pulleys of different diameters are integrally formed and, the endless belt is held in touch with one of the moving pulleys and the other of the moving pulleys in the first half and in the second half of the course. Therefore, the rectilinear moving apparatus of the present embodiment becomes simple in structure and inexpensive, with achieving the high reduction gear, augmenting the thrust, improving the positional accuracy and reducing the loss of movement. Moreover, if the ratio of the diameters of the moving pulleys is changed, it becomes possible to change the moving amount of the slider to the rotating amount of the driving motor.

Although the present invention has been fully described in connection with the preferred embodiment thereof with reference to the accompanying drawings, it is to be noted that various changes and modifications are apparent to those skilled in the art. Such changes and modifications are to be understood as included within the scope of the present invention as defined by the appended claims unless they depart therefrom.

## Claims

1. A rectilinear moving apparatus comprising:
   a driving motor (11);
   a driving pulley (13) coupled to the driving motor so as to reversibly rotate;
   an idler pulley (14) which axis is parallel to an axis of the driving pulley;
   first and second moving pulleys (16a,16b) of different diameters formed in one unit so as to integrally rotate around a common rotary axis and arranged between the driving pulley and the idler pulley while rotary centers of the moving pulleys, the driving pulley, and the idler pulley are aligned in a straight line;
   an endless belt (15) held between the driving pulley, the first and second moving pulleys, and the idler pulley to be moved by the driving motor;
   a rectilinear sliding member (17) on which the first and second moving pulleys are rotatably supported and which is guided along a rectilinear direction by a rectilinear guide member (40); and
   first and second pairs of guide rollers (18a,18b,18c,18d), which are rotatably supported on the sliding member, for guiding the belt along a peripheral portion of the first moving pulley by the first pair of the guide rollers while the belt is kept in touch with the first moving pulley in a first half of a course of the sliding member, and guiding the belt along a peripheral portion of the second moving pulley by the second pair of the guide rollers while the belt is kept in touch with the second moving pulley in a second half of the course of the sliding member.

2. The rectilinear moving apparatus as claimed in claim 1, wherein the endless belt is an endless toothed belt.

3. The rectilinear moving apparatus as claimed in claim 1, wherein a rotary axis of the moving pulleys of different diameters is inclined to an axial direction of the driving pulley.

4.  The rectilinear moving apparatus as claimed in claim 3, wherein an inclined angle of the rotary axis of the moving pulleys is 20 degrees.

5.  The rectilinear moving apparatus as claimed in claim 1, wherein the first moving pulley (16b) has a larger diameter, and the second moving pulley (16a) has a small diameter and is fixed on the first moving pulley to integrally rotate together with the first moving pulley.

Fig. 1

*Fig. 2*

## Fig. 3

Fig.4 PRIOR ART

Fig.5 PRIOR ART

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | EUREKA<br>vol. 10, no. 6 , June 1990 , KENT ,GB<br>page 15 XP000209904<br>INNOVATOR'S NOTEBOOK 'differential gears drive low cost motions'<br>----- | 1-5 | F16H19/06 |
| | | | TECHNICAL FIELDS SEARCHED (Int.Cl.5) |
| | | | F16H |

The present search report has been drawn up for all claims

| Place of search | Date of completion of the search | Examiner |
|---|---|---|
| THE HAGUE | 17 March 1994 | Estrela y Calpe, J |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)